# EUROPEAN PATENT APPLICATION

(11) **EP 2 472 312 A1**
(43) Date of publication of application: **04.07.2012**
(21) Application number: 10816915.2
(22) Date of filing: 05.04.2010
(51) Int. Cl.: G02F 1/17

(54) **DISPLAY ELEMENT AND ELECTRIC APPARATUS USING SAME**

(30) Priority: 16.09.2009 JP 2009214731
(71) Applicant: Sharp Kabushiki Kaisha, Osaka-shi, Osaka 545-8522 (JP)
(72) Inventor: MATSUOKA, Toshiki, Osaka-shi, Osaka 545-8522 (JP); NAKAMURA, Kohzoh, Osaka-shi, Osaka 545-8522 (JP); UEKI, Shun, Osaka-shi, Osaka 545-8522 (JP); TOMOTOSHI, Takuma, Osaka-shi, Osaka 545-8522 (JP)
(74) Representative: Müller-Boré & Partner Patentanwälte
(86) International application number: PCT/JP2010/056163
(87) International publication number: WO 2011/033802

(57) **Abstract**

A display element (10) includes an upper substrate (first substrate) (2), a lower substrate (second substrate) (3), and a conductive liquid (16) that is sealed in a display space (S) formed between the upper substrate (2) and the lower substrate (3) so as to be moved toward an effective display region (P1) or a non-effective display region (P2). An insulating film (insulating member) (19) is provided to electrically insulate the end portions of signal electrodes (4) drawn outside pixel regions (P).

## Description

### Technical Field

The present invention relates to a display element that displays information such as images and characters by moving a conductive liquid, and an electric apparatus using the display element.

### Background Art

In recent years, as typified by an electrowetting type display element, a display element that displays information by utilizing a transfer phenomenon of a conductive liquid due to an external electric field has been developed and put to practical use.

Specifically, in such a conventional display element, a display space is formed between first and second substrates, and the inside of the display space is divided by ribs (partitions) in accordance with a plurality of pixel regions (see, e.g., Patent Document 1). Moreover, a conductive liquid is sealed in each of the pixel regions, and signal electrodes are arranged so as to cross scanning electrodes and reference electrodes that are parallel to each other. In this conventional display element, voltages are appropriately applied to the signal electrodes, the scanning electrodes, and the reference electrodes so that the conductive liquid is moved to the scanning electrode side or the reference electrode side in each of the pixel regions, thereby changing the display color on a display surface.

### Prior Art Documents

### Patent Documents

Patent Document 1: WO 2008/155926 A1

### Disclosure of Invention

### Problem to be Solved by the Invention

However, in the above conventional display element, if the conductive liquid leaks out of the pixel region, it may cause a short circuit in a plurality of signal electrodes, which may lead to a display failure in the individual pixel regions located along those signal electrodes.

Specifically, in the conventional display element, each of the pixel regions is not fully enclosed by the ribs in order to improve the speed of movement of the conductive liquid inside the pixel region. Therefore, if an unusual shock or vibration is applied to the display element, the conductive liquid can leak out of the pixel region. Moreover, in the conventional display element, the scanning electrodes and the reference electrodes are electrically insulated from the conductive liquid, while the signal electrodes are provided in contact with the conductive liquid to improve the responsibility of the conductive liquid. In other words, the signal electrodes are drawn outside the pixel regions without being electrically insulated from the conductive liquid, and connected to a signal driver (signal voltage application portion). Therefore, the conductive liquid leaks out of the pixel region, e.g., when an unusual shock is applied to the conventional display element, and may cause a plurality of, e.g., two adjacent signal electrodes to be short-circuited. Consequently, in the conventional display element, a linear display failure may occur in the individual pixel regions located along the short-circuited signal electrodes.

As described above, in the conventional display element, when the conductive liquid leaks out of the pixel region, a display failure may occur not only in the pixel region from which the conductive liquid has leaked out, but also in the normal pixel regions from which no conductive liquid has leaked out.

With the foregoing in mind, it is an object of the present invention to provide a display element that can minimize a display failure even if a conductive liquid leaks out of a pixel region, and an electric apparatus using the display element.

### Means for Solving Problem

To achieve the above object, a display element of the present invention includes the following: a first substrate provided on a display surface side; a second substrate provided on a non-display surface side of the first substrate so that a predetermined display space is formed between the first substrate and the second substrate; an effective display region and a non-effective display region that are defined with respect to the display space; and a conductive liquid sealed in the display space so as to be moved toward the effective display region or the non-effective display region. The display element is capable of changing a display color on the display surface side by moving the conductive liquid. The display element includes the following: a plurality of signal electrodes that are placed in the display space so as to come into contact with the conductive liquid, and are also provided along a predetermined arrangement direction; a plurality of reference electrodes that are provided on one of the first substrate and the second substrate so as to be electrically insulated from the conductive liquid and to be located on one of the effective display region side and the non-effective display region side, and are also arranged so as to intersect with the plurality of the signal electrodes; a plurality of scanning electrodes that are provided on one of the first substrate and the second substrate so as to be electrically insulated from the conductive liquid and the plurality of the reference electrodes and to be located on the other of the effective display region side and the non-effective display region side, and are also arranged so as to intersect with the plurality of the signal electrodes; a plurality of pixel regions that are located at each of the intersections of the plurality of the signal electrodes and the plurality of the scanning electrodes; and ribs that are provided on at least one of the first substrate and the second substrate so as to partition the inside of the display space in accordance with each of the plurality of the pixel regions. An insulating member is provided to electrically insulate end portions of the plurality of the signal electrodes drawn outside the plurality of the pixel regions.

In the display element having the above configuration, the end portions of the signal electrodes drawn outside the pixel regions are electrically insulated by the insulating member. Therefore, even if the conductive liquid leaks out of the pixel region, e.g., when an unusual shock or vibration is applied to the display element, the display element can prevent a plurality of signal electrodes from being short-circuited by the leakage of the conductive liquid, and thus can prevent the occurrence of a linear display failure. Consequently, unlike the conventional example, even if the conductive liquid leaks out of the pixel region, the display element can minimize the display failure.

In the above display element, the insulating member may include an insulating film that covers the end portions of the plurality of the signal electrodes.

In this case, the end portions of the signal electrodes drawn outside the pixel regions can be electrically insulated by the insulating film.

In the above display element, the insulating member may include extended portions of the ribs that are extended in the arrangement direction of the plurality of the signal electrodes so as to cover the end portions of the plurality of the signal electrodes.

In this case, the end portions of the signal electrodes drawn outside the pixel regions can be electrically insulated by the extended portions of the ribs.

In the above display element, it is preferable that a hydrophobic film is formed on the surface of the insulating member.

In this case, the hydrophobic film can prevent spread of the conductive liquid that has leaked out of the pixel region.

In the above display element, the insulating member may include a sealing film that is interposed between the first substrate and the second substrate.

In this case, the end portions of the signal electrodes drawn outside the pixel regions can be electrically insulated by the sealing film.

In the above display element, it is preferable that the sealing film is provided along the entire periphery of the first substrate and the second substrate, and seals a gap between the first substrate and the second substrate.

In this case, the sealing film that electrically insulates the end portions of the signal electrodes drawn outside the pixel regions also can serve as a sealing member for sealing a gap between the first substrate and the second substrate. Therefore, the display element having a simple structure can be easily achieved.

A display element of the present invention includes the following: a first substrate provided on a display surface side; a second substrate provided on a non-display surface side of the first substrate so that a predetermined display space is formed between the first substrate and the second substrate; an effective display region and a non-effective display region that are defined with respect to the display space; and a conductive liquid sealed in the display space so as to be moved toward the effective display region or the non-effective display region. The display element is capable of changing a display color on the display surface side by moving the conductive liquid. The display element includes the following: a plurality of signal electrodes that are placed in the display space so as to come into contact with the conductive liquid, and are also provided along a predetermined arrangement direction; a plurality of reference electrodes that are provided on one of the first substrate and the second substrate so as to be electrically insulated from the conductive liquid and to be located on one of the effective display region side and the non-effective display region side, and are also arranged so as to intersect with the plurality of the signal electrodes; a plurality of scanning electrodes that are provided on one of the first substrate and the second substrate so as to be electrically insulated from the conductive liquid and the plurality of the reference electrodes and to be located on the other of the effective display region side and the non-effective display region side, and are also arranged so as to intersect with the plurality of the signal electrodes; a plurality of pixel regions that are located at each of the intersections of the plurality of the signal electrodes and the plurality of the scanning electrodes; and ribs that are provided on at least one of the first substrate and the second substrate so as to partition the inside of the display space in accordance with each of the plurality of the pixel regions. The ribs have elongated portions that are elongated along the arrangement direction of the plurality of the signal electrodes so as to sandwich each of end portions of the plurality of the signal electrodes drawn outside the plurality of the pixel regions.

In the display element having the above configuration, the ribs have the elongated portions that are elongated along the arrangement direction of the signal electrodes so as to sandwich each of the end portions of the signal electrodes drawn outside the pixel regions. Therefore, even if the conductive liquid leaks out of the pixel region, e.g., when an unusual shock or vibration is applied to the display element, the display element can prevent a plurality of signal electrodes from being short-circuited by the leakage of the conductive liquid, and thus can prevent the occurrence of a linear display failure. Consequently, unlike the conventional example, even if the conductive liquid leaks out of the pixel region, the display element can minimize the display failure.

In the above display element, it is preferable that the plurality of the signal electrodes are provided along a predetermined arrangement direction, and the plurality of the reference electrodes and the plurality of the scanning electrodes are alternately arranged so as to intersect with the plurality of the signal electrodes. It is also preferable that the display element includes the following: a signal voltage application portion that is connected to the plurality of the signal electrodes and applies a signal voltage in a predetermined voltage range to each of the signal electrodes in accordance with information to be displayed on the display surface side; a reference voltage application portion that is connected to the plurality of the reference electrodes and applies one of a selected voltage and a non-selected voltage to each of the reference electrodes, the selected voltage allowing the conductive liquid to move in the display space in accordance with the signal voltage and the non-selected voltage inhibiting a movement of the conductive liquid in the display space; and a scanning voltage application portion that is connected to the plurality of the scanning electrodes and applies one of a selected voltage and a non-selected voltage to each of the scanning electrodes, the selected voltage allowing the conductive liquid to move in the display space in accordance with the signal voltage the non-selected voltage inhibiting a movement of the conductive liquid in the display space.

In this case, a matrix-driven display element with excellent display quality can be provided.

In the above display element, the plurality of the pixel regions may be provided in accordance with a plurality of colors that enable full-color display to be shown on the display surface side.

In this case, the color image display can be performed by moving the corresponding conductive liquid properly in each of the pixels.

In the above display element, it is preferable that an insulating fluid that is not mixed with the conductive liquid is movably sealed in the display space.

In this case, the speed of movement of the conductive liquid can be easily improved.

In the above display element, it is preferable that a dielectric layer is formed on the surfaces of the plurality of the reference electrodes and the plurality of the scanning electrodes.

In this case, the dielectric layer reliably increases the electric field applied to the conductive liquid, so that the speed of movement of the conductive liquid can be more easily improved.

In the above display element, the non-effective display region may be defined by a light-shielding layer that is provided on one of the first substrate and the second substrate, and the effective display region may be defined by an aperture formed in the light-shielding layer.

In this case, the effective display region and the non-effective display region can be properly and reliably defined with respect to the display space.

An electric apparatus of the present invention includes a display portion that displays information including characters and images. The display portion includes any of the above display elements.

In the electric apparatus having the above configuration, the display portion uses the display element that can minimize the display failure even if the conductive liquid leaks out of the pixel region. Thus, a high-performance electric apparatus including the display portion that is capable of suppressing the occurrence of a display failure can be easily provided.

### Effects of the Invention

The present invention can provide a display element that can minimize a display failure even if the conductive liquid leaks out of the pixel region, and an electric apparatus using the display element.

### Brief Description of Drawings

[FIG. 1] FIG. 1 is plan view for explaining a display element and an image display apparatus of Embodiment 1 of the present invention.
[FIG. 2] FIG. 2 is an enlarged plan view showing the main configuration of the upper substrate in FIG. 1 when viewed from a display surface side.
[FIG. 3] FIG. 3 is an enlarged plan view showing the main configuration of the lower substrate in FIG. 1 when viewed from a non-display surface side.
[FIG. 4] FIGS. 4A and 4B are cross-sectional views showing the main configuration of the display element in FIG. 1 during non-CF color display and CF color display, respectively.
[FIG. 5] FIG. 5 is a plan view showing the main configuration of the display element.
[FIG. 6] FIGS. 6A and 6B are cross-sectional views taken along the line VIa-VIa and the line VIb-VIb in FIG. 5, respectively.
[FIG. 7] FIGS. 7A and 7B are diagrams for explaining display failures of a product of this embodiment and a conventional product when a conductive liquid leaks out of a pixel region, respectively.
[FIG. 8] FIG. 8 is a diagram for explaining an operation example of the image display apparatus.
[FIG. 9] FIG. 9 is a plan view showing the main configuration of a display element of Embodiment 2 of the present invention.
[FIG. 10] FIGS. 10A and 10B are cross-sectional views taken along the line Xa-Xa and the line Xb-Xb in FIG. 9, respectively.
[FIG. 11] FIG. 11 is a plan view for explaining an image display apparatus of a modified example of Embodiment 2 of the present invention.
[FIG. 12] FIG. 12 is a plan view showing the main configuration of a display element of Embodiment 3 of the present invention.
[FIG. 13] FIGS. 13A and 13B are cross-sectional views taken along the line XIIIa-XIIIa and the line XIIIb-XIIIb in FIG. 12, respectively.
[FIG. 14] FIG. 14 is a plan view showing the main configuration of a display element of Embodiment 4 of the present invention.
[FIG. 15] FIGS. 15A and 15B are cross-sectional views taken along the line XVa-XVa and the line XVb-XVb in FIG. 14, respectively.
[FIG. 16] FIG. 16 is a diagram for explaining a display failure of a product of this embodiment when a conductive liquid leaks out of a pixel region.

### Description of the Invention

Hereinafter, preferred embodiments of a display element and an electric apparatus of the present invention will be described with reference to the drawings. In the following description, the present invention is applied to an image display apparatus including a display portion that can display color images. The size and size ratio of each of the constituent members in the drawings do not exactly reflect those of the actual constituent members.

### [Embodiment 1]

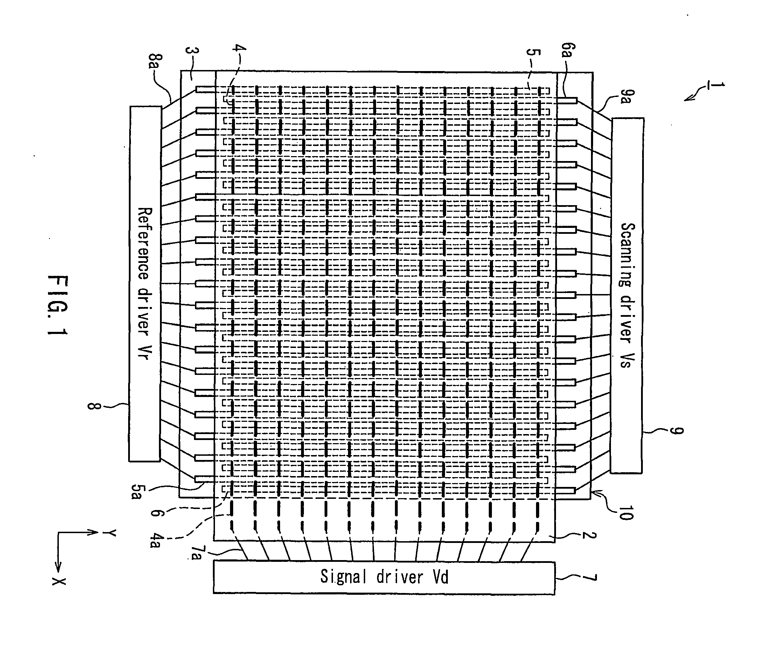

FIG. 1 is a plan view for explaining a display element and an image display apparatus of Embodiment 1 of the present invention. In FIG. 1, an image display apparatus 1 of this embodiment includes a display portion using a display element 10 of the present invention. The display portion has a rectangular display surface. The display element 10 includes an upper substrate 2 and a lower substrate 3 that are arranged to overlap each other in a direction perpendicular to the sheet of FIG. 1. The overlap between the upper substrate 2 and the lower substrate 3 forms an effective display region of the display surface (as will be described in detail later).

In the display element 10, a plurality of signal electrodes 4 are spaced at predetermined intervals and arranged in stripes in the X direction. Moreover, in the display element 10, a plurality of reference electrodes 5 and a plurality of scanning electrodes 6 are alternately arranged in stripes in the Y direction. The plurality of the signal electrodes 4 intersect with the plurality of the reference electrodes 5 and the plurality of the scanning electrodes 6, and a plurality of pixel regions are located at each of the intersections of the signal electrodes 4 and the scanning electrodes 6.

The signal electrodes 4, the reference electrodes 5, and the scanning electrodes 6 are configured so that voltages can be independently applied to these electrodes, and the voltages fall in a predetermined voltage range between a High voltage (referred to as "H voltage" in the following) that serves as a first voltage and a Low voltage (referred to as "L voltage" in the following) that serves as a second voltage (as will be described in detail later).

In the display element 10, the pixel regions are separated from one another by partitions and provided in accordance with a plurality of colors that enable full-color display to be shown on the display surface, as will be described in detail later. The display element 10 changes the display color on the display surface by moving a conductive liquid (as will be described later) for each of a plurality of pixels (display cells) arranged in a matrix using an electrowetting phenomenon.

One end of the signal electrodes 4, the reference electrodes 5, and the scanning electrodes 6 are extended to the outside of the effective display region of the display surface and form terminals 4a, 5a, and 6a, respectively.

A signal driver 7 is connected to the individual terminals 4a of the signal electrodes 4 via wires 7a. The signal driver 7 constitutes a signal voltage application portion and applies a signal voltage Vd to each of the signal electrodes 4 in accordance with information when the image display apparatus 1 displays the information including characters and images on the display surface.

A reference driver 8 is connected to the individual terminals 5a of the reference electrodes 5 via wires 8a. The reference driver 8 constitutes a reference voltage application portion and applies a reference voltage Vr to each of the reference electrodes 5 when the image display apparatus 1 displays the information including characters and images on the display surface.

A scanning driver 9 is connected to the individual terminals 6a of the scanning electrodes 6 via wires 9a. The scanning driver 9 constitutes a scanning voltage application portion and applies a scanning voltage Vs to each of the scanning electrodes 6 when the image display apparatus 1 displays the information including characters and images on the display surface.

The scanning driver 9 applies either a non-selected voltage or a selected voltage to each of the scanning electrodes 6 as the scanning voltage Vs. The non-selected voltage inhibits the movement of the conductive liquid and the selected voltage allows the conductive liquid to move in accordance with the signal voltage Vd. Moreover, the reference driver 8 is operated with reference to the operation of the scanning driver 9. The reference driver 8 applies either the non-selected voltage that inhibits the movement of the conductive liquid or the selected voltage that allows the conductive liquid to move in accordance with the signal voltage Vd to each of the reference electrodes 5 as the reference voltage Vr.

In the image display apparatus 1, the scanning driver 9 applies the selected voltage to each of the scanning electrodes 6 in sequence, e.g., from the left to the right of FIG. 1, and the reference driver 8 applies the selected voltage to each of the reference electrodes 5 in sequence from the left to the right of FIG. 1 in synchronization with the operation of the scanning driver 9. Thus, the scanning driver 9 and the reference driver 8 perform their respective scanning operations for each line (as will be described in detail later).

The signal driver 7, the reference driver 8, and the scanning driver 9 include a direct-current power supply or an alternating-current power supply that supplies the signal voltage Vd, the reference voltage Vr, and the scanning voltage Vs, respectively.

The reference driver 8 switches the polarity of the reference voltage Vr at predetermined time intervals (e.g., 1 frame). Moreover, the scanning driver 9 switches the polarity of the scanning voltage Vs in accordance with the switching of the polarity of the reference voltage Vr. Thus, since the polarities of the reference voltage Vr and the scanning voltage Vs are switched at predetermined time intervals, the localization of charges in the reference electrodes 5 and the scanning electrodes 6 can be prevented, compared to the case where the voltages with the same polarity are always applied to the reference electrodes 5 and the scanning electrodes 6. Moreover, it is possible to prevent the adverse effects of a display failure (after-image phenomenon) and low reliability (a reduction in life) due to the localization of charges.

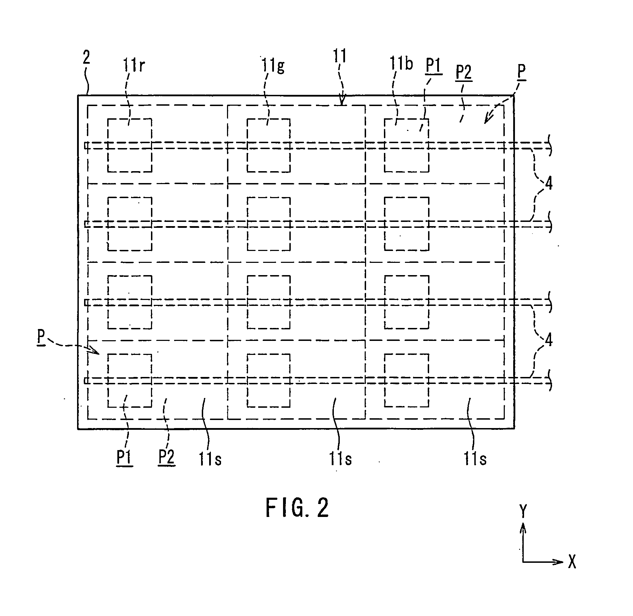

The pixel structure of the display element 10 will be described in detail with reference to FIGS. 2 to 4 as well as FIG. 1.

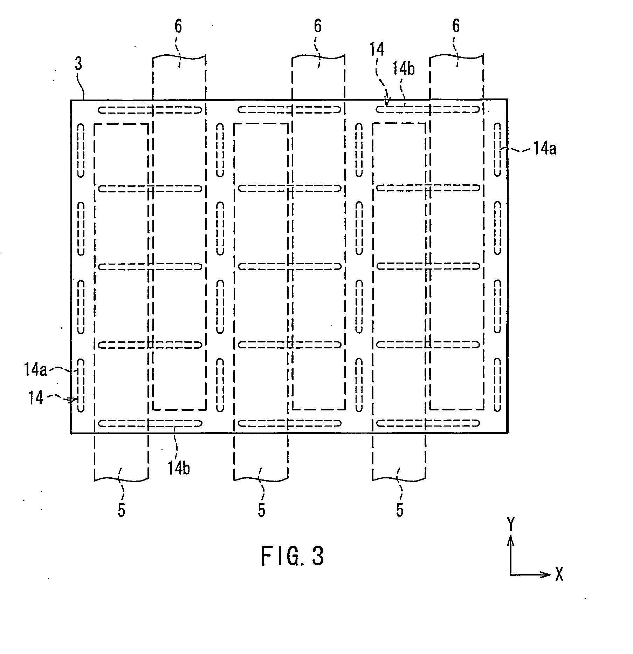

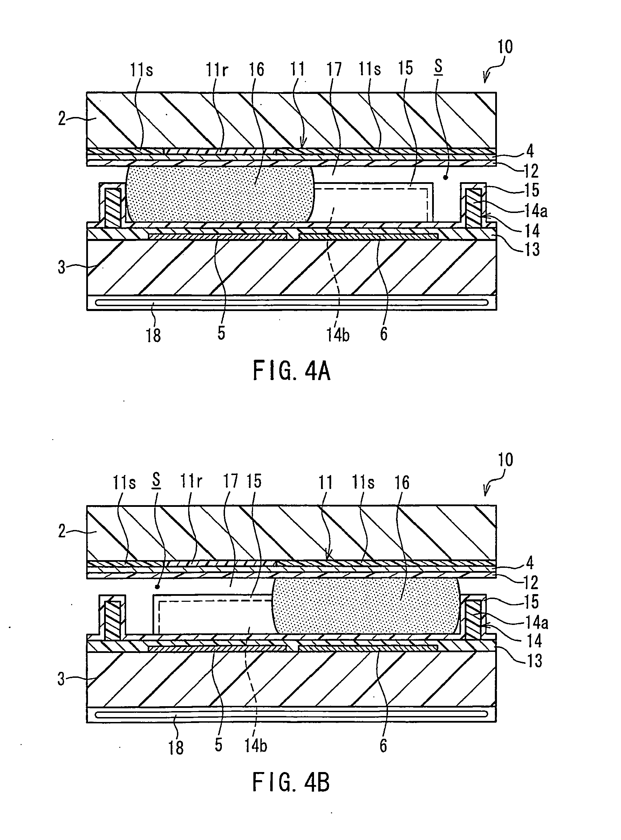

FIG. 2 is an enlarged plan view showing the main configuration of the upper substrate in FIG. 1 when viewed from the display surface side. FIG. 3 is an enlarged plan view showing the main configuration of the lower substrate in FIG. 1 when viewed from the non-display surface side. FIGS. 4A and 4B are cross-sectional views showing the main configuration of the display element in FIG. 1 during non-CF color display and CF color display, respectively. For the sake of simplification, FIGS. 2 and 3 show twelve pixels placed at the upper left corner of the plurality of pixels on the display surface in FIG. 1.

In FIGS. 2 to 4, the display element 10 includes the upper substrate 2 that is provided on the display surface side and serves as a first substrate, and the lower substrate 3 that is provided on the back (i.e., the non-display surface side) of the upper substrate 2 and serves as a second substrate. In the display element 10, the upper substrate 2 and the lower substrate 3 are located at a predetermined distance away from each other, so that a predetermined display space S is formed between the upper substrate 2 and the lower substrate 3. The conductive liquid 16 and an insulating oil 17 that is not mixed with the conductive liquid 16 are sealed in the display space S and can be moved in the X direction (the lateral direction of FIG. 4). The conductive liquid 16 can be moved toward an effective display region P1 or a non-effective display region P2, as will be described later.

The conductive liquid 16 can be, e.g., an aqueous solution including water as a solvent and a predetermined electrolyte as a solute. Specifically, 1 mmol/L of potassium chloride (KCI) aqueous solution may be used as the conductive liquid 16. Moreover, the conductive liquid 16 is colored black, e.g., with a self-dispersible pigment.

The conductive liquid 16 is colored black and therefore functions as a shutter that allows or prevents light transmission. When the conductive liquid 16 is slidably moved in the display space S toward the reference electrode 5 (i.e., the effective display region P1) or the scanning electrode 6 (i.e., the non-effective display region P2), the display color of each pixel of the display element 10 is changed to black or any color of RBG, as will be described in detail later.

The oil 17 can be, e.g., a nonpolar, colorless, and transparent oil including one or more than one selected from a side-chain higher alcohol, a side-chain higher fatty acid, an alkane hydrocarbon, a silicone oil, and a matching oil. The oil 17 is shifted in the display space S as the conductive liquid 16 is slidably moved.

The upper substrate 2 can be, e.g., a transparent glass material such as a non-alkali glass substrate or a transparent sheet material such as a transparent synthetic resin (e.g., an acrylic resin). A color filter layer 11 and the signal electrodes 4 are formed in this order on the surface of the upper substrate 2 that faces the non-display surface side. Moreover, a hydrophobic film 12 is formed to cover the color filter layer 11 and the signal electrodes 4.

Like the upper substrate 2, the lower substrate 3 can be, e.g., a transparent glass material such as a non-alkali glass substrate or a transparent sheet material such as a transparent synthetic resin (e.g., an acrylic resin). The reference electrodes 5 and the scanning electrodes 6 are provided on the surface of the lower substrate 3 that faces the display surface side. Moreover, a dielectric layer 13 is formed to cover the reference electrodes 5 and the scanning electrodes 6. Ribs 14a and 14b are formed parallel to the Y direction and the X direction, respectively, on the surface of the dielectric layer 13 that faces the display surface side. In the lower substrate 3, a hydrophobic film 15 is further formed to cover the dielectric layer 13 and the ribs 14a, 14b.

A backlight 18 that emits, e.g., white illumination light is integrally attached to the back (i.e., the non-display surface side) of the lower substrate 3, thus providing a transmission type display element 10. The backlight 18 uses a light source such as a cold cathode fluorescent tube or a LED.

The color filter layer 11 includes red (R), green (G), and blue (B) color filters 11r, 11g, and 11b and a black matrix 11s serving as a light-shielding layer, thereby constituting the pixels of R, G, and B colors. In the color filter layer 11, as shown in FIG. 2, the R, G, and B color filters 11r, 11g, and 11b are successively arranged in columns in the X direction, and each column includes four color filters in the Y direction. Thus, a total of twelve pixels are arranged in three columns (the X direction) and four rows (the Y direction).

As shown in FIG. 2, in each of the pixel regions P of the display element 10, any of the R, G, and B color filters 11r, 11g, and 11b is provided in a portion corresponding to the effective display region P1 and the black matrix 11s is provided in a portion corresponding to the non-effective display region P2 of the pixel. In other words, with respect to the display space S, the non-effective display region (non-aperture region) P2 is defined by the black matrix (light-shielding layer) 11s and the effective display region P1 is defined by an aperture (i.e., any of the color filters 11r, 11g, and 11b) formed in that black matrix 11s.

In the display element 10, the area of each of the color filters 11r, 11g, and 11b is the same as or slightly larger than that of the effective display region P1. On the other hand, the area of the black matrix 11s is the same as or slightly smaller than that of the non-effective display region P2. In FIG. 2, the boundary between two black matrixes 11s corresponding to the adjacent pixels is indicated by a dotted line to clarify the boundary between the adjacent pixels. Actually, however, no boundary is present between the black matrixes 11s of the color filter layer 11.

In the display element 10, the display space S is divided into the pixel regions P by the ribs 14a, 14b serving as the partitions as described above. Specifically, as shown in FIG. 3, the display space S of each pixel is partitioned by two opposing ribs 14a and two opposing ribs 14b. Moreover, in the display element 10, the ribs 14a, 14b prevent the conductive liquid 16 from flowing into the display space S of the adjacent pixel regions P. The ribs 14a, 14b are made of, e.g., a light-curing resin, and the height of the ribs 14a, 14b protruding from the dielectric layer 13 is determined so as to prevent the flow of the conductive liquid 16 between the adjacent pixels.

Other than the above description, e.g., frame-shaped ribs may be formed for each pixel on the lower substrate 3 instead of the ribs 14a, 14b. Moreover, other than the above description, the ribs 14a, 14b may be formed on the upper substrate (first substrate) 2, as will be described later in Embodiments 3 and 4. Further, the ribs 14a and the ribs 14b may be formed on one of the upper substrate (first substrate) 2 and the lower substrate (second substrate) 3 and the other, respectively.

The hydrophobic films 12, 15 are made of, e.g., a transparent synthetic resin such as a fluoro polymer. This can significantly change the wettability (contact angle) between the conductive liquid 16 and each of the surfaces of the upper and lower substrates 2, 3 that face the display space S. Thus, the speed of movement of the conductive liquid 16 can be improved. The dielectric layer 13 can be, e.g., a transparent dielectric film containing parylene, a silicon nitride, a hafnium oxide, a zinc oxide, a titanium dioxide, or an aluminum oxide. A specific thickness of each of the hydrophobic films 12, 15 ranges from several tens of nanometers to several micrometers. A specific thickness of the dielectric layer 13 is several hundred nanometers. The hydrophobic film 12 does not electrically insulate the signal electrodes 4 from the conductive liquid 16, and therefore not interfere with the improvement in responsibility of the conductive liquid 16.

The reference electrodes 5 and the scanning electrodes 6 are made of, e.g., transparent electrode materials such as indium oxides (ITO), tin oxides (SnO₂), and zinc oxides (AZO, GZO, or IZO). The reference electrodes 5 and the scanning electrodes 6 are formed in stripes on the lower substrate 3 by a known film forming method such as sputtering.

The signal electrodes 4 can be, e.g., linear wiring that is arranged parallel to the X direction. The signal electrodes 4 are placed on the color filter layer 11 so as to extend substantially through the center of each of the pixel regions P in the Y direction, and further to come into electrical contact with the conductive liquid 16 via the hydrophobic film 12. This can improve the responsibility of the conductive liquid 16 during a display operation.

A material that is electrochemically inert to the conductive liquid 16 is used for the signal electrodes 4. Therefore, even if the signal voltage Vd (e.g., 40 V) is applied to the signal electrodes 4, the electrochemical reaction between the signal electrodes 4 and the conductive liquid 16 can be minimized. Thus, it is possible to prevent electrolysis of the signal electrodes 4 and to improve the reliability and life of the display element 10.

Specifically, the signal electrodes 4 are made of, e.g., an electrode material including at least one of gold, silver, copper, platinum, and palladium. The signal electrodes 4 may be formed by fixing thin wires made of the above metal material on the color filter layer 11 or by mounting an ink material such as a conductive paste containing the metal material on the color filter layer 11 with screen printing or the like.

The shape of the signal electrode 4 is determined using the transmittance of the reference electrode 5 located below the effective display region P1 of the pixel. Specifically, based on a transmittance of about 75% to 95% of the reference electrode 5, the shape of the signal electrode 4 is determined so that the occupation area of the signal electrode 4 on the effective display region P1 is 30% or less, preferably 10% or less, and more preferably 5% or less of the area of the effective display region P1.

Moreover, the end portions of the signal electrodes 4 drawn outside the pixel regions P are electrically insulated by an insulating member. This configuration can minimize a display failure even if the conductive liquid 16 leaks out of the pixel region P (as will be described in detail later).

In each pixel of the display element 10 having the above configuration, as shown in FIG. 4A, when the conductive liquid 16 is held between the color filter 11r and the reference electrode 5, light from the backlight 18 is blocked by the conductive liquid 16, so that the black display (non-CF color display) is performed. On the other hand, as shown in FIG. 4B, when the conductive liquid 16 is held between the black matrix 11s and the scanning electrode 6, light from the backlight 18 is not blocked by the conductive liquid 16 and passes through the color filter 11r, so that the red display (CF color display) is performed.

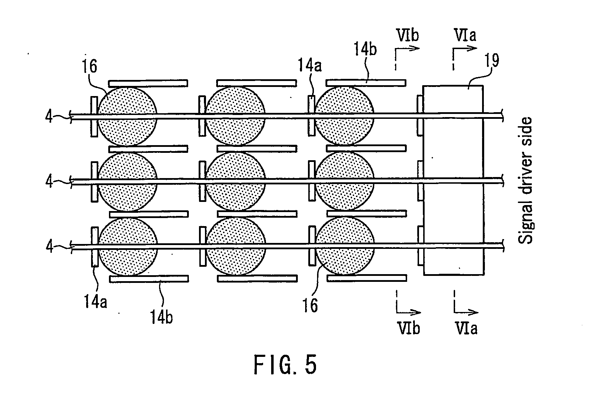

Hereinafter, the electrically insulated state of the end portions of the signal electrodes 4 by the insulating member and the effect of the insulation will be described in detail with reference to FIGS. 5 to 7 as well as FIGS. 1 to 4.

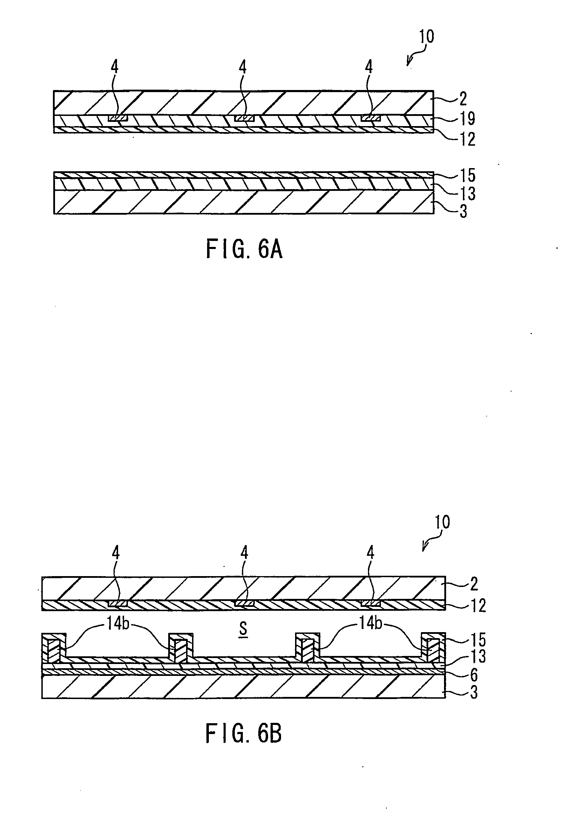

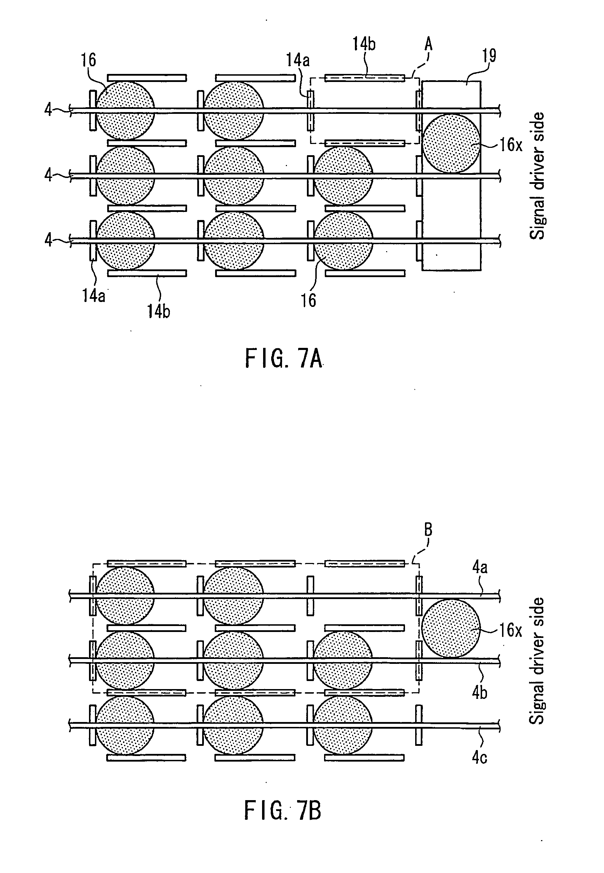

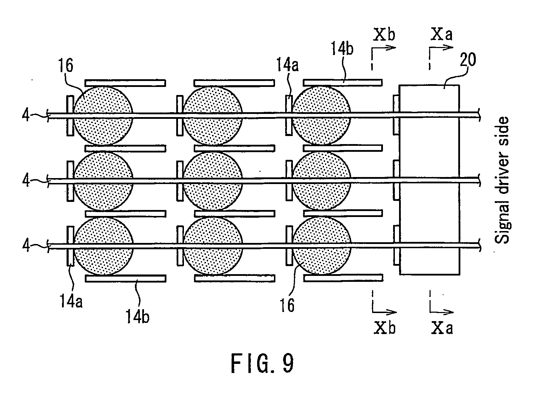

FIG. 5 is a plan view showing the main configuration of the above display element. FIGS. 6A and 6B are cross-sectional views taken along the line VIa-VIa and the line VIb-VIb in FIG. 5, respectively. FIGS. 7A and 7B are diagrams for explaining the display failures of a product of this embodiment and a conventional product when the conductive liquid leaks out of the pixel region, respectively. For the sake of simplification, FIGS. 5 to 7 show nine pixels placed at the upper right corner of the plurality of pixels on the display surface in FIG. 1 (the same is true for FIGS. 9, 10, and 12 to 16 in the following).

As shown in FIGS. 5 and 6A, the end portions of the signal electrodes 4 are drawn from the inside of the pixel regions P to the signal driver 7 side and covered with an insulating film (insulating member) 19 that is formed on the surface of the upper substrate 2. In other words, the end portions of the signal electrodes 4 drawn outside the pixel regions P are electrically insulated by the upper substrate 2 and the insulating film 19. The insulating film 19 is made of, e.g., silicon dioxide. A specific thickness of the insulating film 19 is several hundred nanometers. Moreover, the insulating film 19 is provided along the entire periphery of the upper substrate 2 and the lower substrate 3, and located inside a sealing member (not shown) for sealing a gap between the upper substrate 2 and the lower substrate 3 so that the insulating film 19 and the sealing member are close to each other.

As shown in FIG. 6B, in each of the pixel regions P, the signal electrode 4 is not covered with the insulating film 19, and directly comes into contact with the conductive liquid 16 via the hydrophobic film 12, as described above.

In the product of this embodiment having the above configuration, even if the conductive liquid 16 leaks out of the pixel region P, e.g., due to an unusual shock or vibration applied to the display element 10, the product can prevent a plurality of signal electrodes from being short-circuited by the leakage of the conductive liquid 16. As shown in FIG. 7A, when a conductive liquid 16x leaks out from the upper right pixel region P to the signal driver 7 side and flows into a lower place between two adjacent signal electrodes 4, these two signal electrodes 4 are electrically insulated by the insulating film 19. Accordingly, it is possible to prevent a short circuit in the two adjacent signal electrodes 4 caused by the conductive liquid 16x. Consequently, in the display element 10 of this embodiment, a display failure is to occur only in the upper right pixel region P from which the conductive liquid 16x has leaked out, as indicated by a dotted line A in FIG. 7A. Therefore, even when the conductive liquid 16x leaks out to the signal deriver 7 side, the display element 10 of this embodiment can limit the display failure to a point defect alone, and thus can minimize the display failure.

On the other hand, in the conventional product that does not have the insulating film 19, as shown in FIG. 7B, the conductive liquid 16x that has leaked out to the signal driver 7 side may cause the two adjacent signal electrodes 4a, 4b to be short-circuited. When the two signal electrodes 4a, 4b are short-circuited, a display failure occurs in the pixel regions P arranged in two rows along the signal electrodes 4a, 4b, as indicated by a dotted line B in FIG. 7B. Thus, when the conductive liquid 16x leaks out to the signal driver 7 side, the conventional product cannot prevent the occurrence of a linear display failure in some cases.

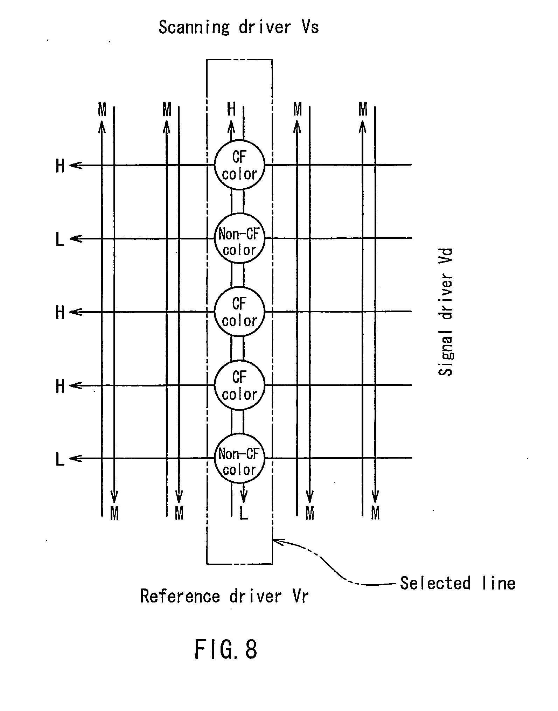

Hereinafter, a display operation of the image display apparatus 1 of this embodiment having the above configuration will be described in detail with reference to FIG. 8 as well as FIGS. 1 to 7.

FIG. 8 is a diagram for explaining an operation example of the image display apparatus 1.

In FIG. 8, the reference driver 8 and the scanning driver 9 apply the selected voltages (i.e., the reference voltage Vr and the scanning voltage Vs) to the reference electrodes 5 and the scanning electrodes 6 in sequence in a predetermined scanning direction, e.g., from the left to the right of FIG. 8, respectively. Specifically, the reference driver 8 and the scanning driver 9 perform their scanning operations to determine a selected line by applying the H voltage (first voltage) and the L voltage (second voltage) as the selected voltages to the reference electrodes 5 and the scanning electrodes 6 in sequence, respectively. In this selected line, the signal driver 7 applies the H or L voltage (i.e., the signal voltage Vd) to the corresponding signal electrodes 4 in accordance with the external image input signal. Thus, in each of the pixels of the selected line, the conductive liquid 16 is moved toward the effective display region P1 or the non-effiective display region P2, and the display color on the display surface is changed accordingly.

On the other hand, the reference driver 8 and the scanning driver 9 apply the non-selected voltages (i.e., the reference voltage Vr and the scanning voltage Vs) to non-selected lines, namely to all the remaining reference electrodes 5 and scanning electrodes 6, respectively. Specifically, the reference driver 8 and the scanning driver 9 apply, e.g., intermediate voltages (Middle voltages, referred to as "M voltages" in the following) between the H voltage and the L voltage as the non-selected voltages to all the remaining reference electrodes 5 and scanning electrodes 6, respectively. Thus, in each of the pixels of the non-selected lines, the conductive liquid 16 stands still without unnecessary displacement from the effective display region P1 or the non-effective display region P2, and the display color on the display surface is unchanged.

Table 1 shows the combinations of the voltages applied to the reference electrodes 5, the scanning electrodes 6, and the signal electrodes 4 in the above display operation. As shown in Table 1, the behavior of the conductive liquid 16 and the display color on the display surface depend on the applied voltages. In Table 1, the H voltage, the L voltage, and the M voltage are abbreviated to "H", "L", and "M", respectively (the same is true for Table 2 in the following). The specific values of the H voltage, the L voltage, and the M voltage are, e.g., + 16 V, 0 V, and + 8 V, respectively.

**[TABLE 1]**

| | Reference electrode | Scanning electrode | Signal electrode | Behavior of conductive liquid and display color on display surface |
|---|---|---|---|---|
| Selected line | H | L | H | The conductive liquid is moved toward the scanning electrode. CF color display |
| | | | L | The conductive liquid is moved toward the reference electrode. Black display |
| Non-selected line | M | M | H | The conductive liquid is still (not moving). |
| | | | L | Black or CF color display |

### < Selected line operation >

In the selected line, e.g., when the H voltage is applied to the signal electrodes 4, there is no potential difference between the reference electrode 5 and the signal electrodes 4 because the H voltage is applied to both of these electrodes. On the other hand, a potential difference between the signal electrodes 4 and the scanning electrode 6 occurs because the L voltage is applied to the scanning electrode 6. Therefore, the conductive liquid 16 is moved in the display space S toward the scanning electrode 6 that makes a potential difference from the signal electrodes 4. Consequently, the conductive liquid 16 has been moved toward the non-effective display region P2, as shown in FIG. 4B, and allows the illumination light emitted from the backlight 18 to reach the color filter 11r by shifting the oil 17 toward the reference electrode 5. Thus, the display color on the display surface becomes red display (i.e., the CF color display) due to the color filter 11r. In the image display apparatus 1, when the CF color display is performed in all the three adjacent R, G, and B pixels as a result of the movement of the conductive liquid 16 toward the non-effective display region P2, the red, green, and blue colors of light from the corresponding R, G, and B pixels are mixed into white light, resulting in the white display.

In the selected line, when the L voltage is applied to the signal electrodes 4, a potential difference occurs between the reference electrode 5 and the signal electrodes 4, but not between the signal electrodes 4 and the scanning electrode 6. Therefore, the conductive liquid 16 is moved in the display space S toward the reference electrode 5 that makes a potential difference from the signal electrodes 4. Consequently, the conductive liquid 16 has been moved toward the effective display region P1, as shown in FIG. 4A, and prevents the illumination light emitted from the backlight 18 from reaching the color filter 11r. Thus, the display color on the display surface becomes black display (i.e., the non-CF color display) due to the presence of the conductive liquid 16.

### < Non-selected line operation >

In the non-selected lines, e.g., when the H voltage is applied to the signal electrodes 4, the conductive liquid 16 stands still in the same position, and the current display color is maintained. Since the M voltages are applied to both the reference electrodes 5 and the scanning electrodes 6, the potential difference between the reference electrodes 5 and the signal electrodes 4 is the same as that between the scanning electrodes 6 and the signal electrodes 4. Consequently, the display color is maintained without changing from the black display or the CF color display in the current state.

Similarly, in the non-selected lines, even when the L voltage is applied to the signal electrodes 4, the conductive liquid 16 stands still in the same position, and the current display color is maintained. Since the M voltages are applied to both the reference electrodes 5 and the scanning electrodes 6, the potential difference between the reference electrodes 5 and the signal electrodes 4 is the same as that between the scanning electrodes 6 and the signal electrodes 4.

As described above, in the non-selected lines, the conductive liquid 16 is not moved, but stands still and the display color on the display surface is unchanged regardless of whether the H or L voltage is applied to the signal electrodes 4.

On the other hand, in the selected line, the conductive liquid 16 can be moved in accordance with the voltage applied to the signal electrodes 4, as described above, and the display color on the display surface can be changed accordingly.

In the image display apparatus 1, depending on the combinations of the applied voltages in Table 1, the display color of each pixel on the selected line can be, e.g., the CF colors (red, green, or blue) produced by the color filters 11r, 11g, and 11b or the non-CF color (black) due to the conductive liquid 16 in accordance with the voltage applied to the signal electrodes 4 corresponding to the individual pixels, as shown in FIG. 8. When the reference driver 8 and the scanning driver 9 determine a selected line of the reference electrode 5 and the scanning electrode 6 by performing their scanning operations, e.g., from the left to the right of FIG. 8, the display colors of the pixels in the display portion of the image display apparatus 1 also are changed in sequence from the left to the right of FIG. 8. Therefore, if the reference driver 8 and the scanning driver 9 perform the scanning operations at a high speed, the display colors of the pixels in the display portion of the image display apparatus 1 also can be changed at a high speed. Moreover, by applying the signal voltage Vd to the signal electrodes 4 in synchronization with the scanning operation for the selected line, the image display apparatus 1 can display various information including dynamic images based on the external image input signal.

The combinations of the voltages applied to the reference electrodes 5, the scanning electrodes 6, and the signal electrodes 4 are not limited to Table 1, and may be as shown in Table 2.

**[TABLE 2]**

| | Reference electrode | Scanning electrode | Signal electrode | Behavior of conductive liquid and display color on display surface |
|---|---|---|---|---|
| Selected line | L | H | L | The conductive liquid is moved toward the scanning electrode. CF color display |
| | | | H | The conductive liquid is moved toward the reference electrode. Black display |
| Non-selected | M | M | H | The conductive liquid is still (not |
| line | | | L | moving). Black or CF color display |

The reference driver 8 and the scanning driver 9 perform their scanning operations to determine a selected line by applying the L voltage (second voltage) and the H voltage (first voltage) as the selected voltages to the reference electrodes 5 and the scanning electrodes 6 in sequence in a predetermined scanning direction, e.g., from the left to the right of FIG. 8, respectively. In this selected line, the signal driver 7 applies the H or L voltage (i.e., the signal voltage Vd) to the corresponding signal electrodes 4 in accordance with the external image input signal.

On the other hand, the reference driver 8 and the scanning driver 9 apply the M voltages as the non-selected voltages to the non-selected lines, namely to all the remaining reference electrodes 5 and scanning electrodes 6.

### < Selected line operation >

In the selected line, e.g., when the L voltage is applied to the signal electrodes 4, there is no potential difference between the reference electrode 5 and the signal electrodes 4 because the L voltage is applied to both of these electrodes. On the other hand, a potential difference between the signal electrodes 4 and the scanning electrode 6 occurs because the H voltage is applied to the scanning electrode 6. Therefore, the conductive liquid 16 is moved in the display space S toward the scanning electrode 6 that makes a potential difference from the signal electrodes 4. Consequently, the conductive liquid 16 has been moved toward the non-effective display region P2, as shown in FIG. 4B, and allows the illumination light emitted from the backlight 18 to reach the color filter 11r by shifting the oil 17 toward the reference electrode 5. Thus, the display color on the display surface becomes red display (i.e., the CF color display) due to the color filter 11r. Like Table 1, when the CF color display is performed in all the three adjacent R, G, and B pixels, the white display is performed.

In the selected line, when the H voltage is applied to the signal electrodes 4, a potential difference occurs between the reference electrode 5 and the signal electrodes 4, but not between the signal electrodes 4 and the scanning electrode 6. Therefore, the conductive liquid 16 is moved in the display space S toward the reference electrode 5 that makes a potential difference from the signal electrodes 4. Consequently, the conductive liquid 16 has been moved toward the effective display region P1, as shown in FIG. 4A, and prevents the illumination light emitted from the backlight 18 from reaching the color filter 11r. Thus, the display color on the display surface becomes black display (i.e., the non-CF color display) due to the presence of the conductive liquid 16.

### < Non-selected line operation >

In the non-selected lines, e.g., when the L voltage is applied to the signal electrodes 4, the conductive liquid 16 stands still in the same position, and the current display color is maintained. Since the M voltages are applied to both the reference electrodes 5 and the scanning electrodes 6, the potential difference between the reference electrodes 5 and the signal electrodes 4 is the same as that between the scanning electrodes 6 and the signal electrodes 4. Consequently, the display color is maintained without changing from the black display or the CF color display in the current state.

Similarly, in the non-selected lines, even when the H voltage is applied to the signal electrodes 4, the conductive liquid 16 stands still in the same position, and the current display color is maintained. Since the M voltages are applied to both the reference electrodes 5 and the scanning electrodes 6, the potential difference between the reference electrodes 5 and the signal electrodes 4 is the same as that between the scanning electrodes 6 and the signal electrodes 4.

In the non-selected lines, as shown in Table 2, similarly to Table 1, the conductive liquid 16 is not moved, but stands still and the display color on the display surface is unchanged regardless of whether the H or L voltage is applied to the signal electrodes 4.

On the other hand, in the selected line, the conductive liquid 16 can be moved in accordance with the voltage applied to the signal electrodes 4, as described above, and the display color on the display surface can be changed accordingly.

In the image display apparatus 1 of this embodiment, other than the combinations of the applied voltages shown in Tables 1 and 2, the voltage applied to the signal electrodes 4 not only has two values of the H voltage and the L voltage, but also may be changed between the H voltage and the L voltage in accordance with information to be displayed on the display surface. That is, the image display apparatus 1 can perform the gradation display by controlling the signal voltage Vd. Thus, the display element 10 can achieve excellent display performance.

In the display element 10 of this embodiment having the above configuration, the end portions of the signal electrodes 4 drawn outside the pixel regions P are electrically insulated by the upper substrate (first substrate) 2 and the insulating film (insulating member) 19. Therefore, even if the conductive liquid 16 leaks out of the pixel region P, e.g., when an unusual shock or vibration is applied to the display element 10, the display element 10 can prevent a plurality of signal electrodes 4 from being short-circuited by the leakage of the conductive liquid 16, and thus can prevent the occurrence of a linear display failure. Consequently, in this embodiment, unlike the conventional example, even if the conductive liquid 16 leaks out of the pixel region P, the display element 10 can minimize the display failure.

In the image display apparatus (electric apparatus) 1 of this embodiment, the display portion uses the display element 10 that can minimize the display failure even if the conductive liquid 16 leaks out of the pixel region P. Thus, a high-performance image display apparatus (electric apparatus) 1 including the display portion that is capable of suppressing the occurrence of a display failure can be easily provided.

In the display element 10 of this embodiment, the signal driver (signal voltage application portion) 7, the reference driver (reference voltage application portion) 8, and the scanning driver (scanning voltage application portion) 9 apply the signal voltage Vd, the reference voltage Vr, and the scanning voltage Vs to the signal electrodes 4, the reference electrodes 5, and the scanning electrodes 6, respectively. Thus, in this embodiment, a matrix-driven display element 10 with excellent display quality can be easily provided, and the display color in each of the pixel regions can be appropriately changed.

Moreover, in the display element 10 of this embodiment, the hydrophobic film 12 is formed on the surface of the insulating film 19 and can prevent spread of the conductive liquid 16 that has leaked out of the pixel region P.

### [Embodiment 2]

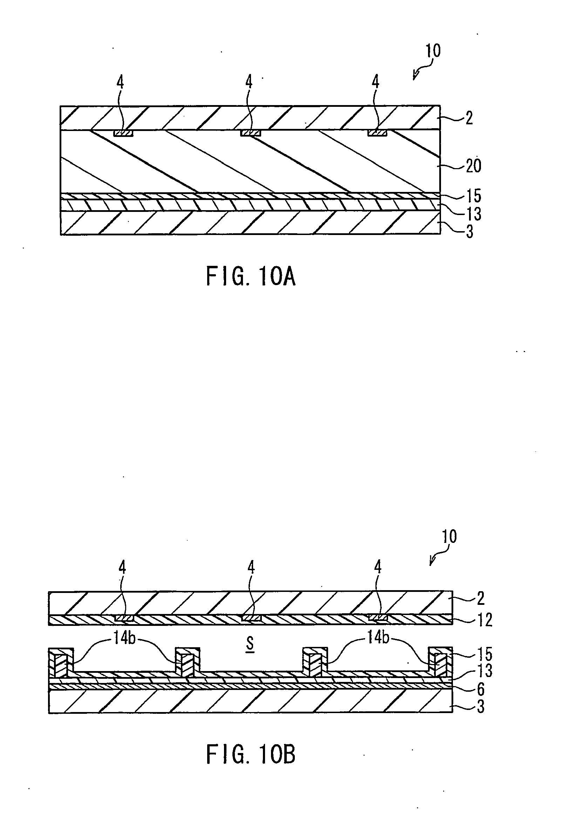

FIG. 9 is a plan view showing the main configuration of a display element of Embodiment 2 of the present invention. FIGS. 10A and 10B are cross-sectional views taken along the line Xa-Xa and the line Xb-Xb in FIG. 9, respectively. In FIGS. 9, 10A, and 10B, this embodiment mainly differs from Embodiment 1 in that a sealing film interposed between the upper substrate and the lower substrate is used instead of the insulating film. The same components as those of Embodiment 1 are denoted by the same reference numerals, and the explanation will not be repeated.

As shown in FIGS. 9 and 10A, in the display element 10 of this embodiment, the end portions of the signal electrodes 4 are drawn from the inside of the pixel regions P to the signal driver 7 side and covered with a sealing film (insulating member) 20 that is interposed between the upper substrate 2 and the lower substrate 3. In other words, the end portions of the signal electrodes 4 drawn outside the pixel regions P are electrically insulated by the upper substrate 2 and the sealing film 20. The sealing film 20 is made of e.g., acrylic resin. Moreover, the sealing film 20 is provided along the entire periphery of the upper substrate 2 and the lower substrate 3, and located inside a sealing member (not shown) for sealing the gap between the upper substrate 2 and the lower substrate 3 so that the sealing film 20 and the sealing member are close to each other.

As shown in FIG. 10B, in each of the pixel regions P, the signal electrode 4 is not covered with the sealing film 20, and directly comes into contact with the conductive liquid 16 via the hydrophobic film 12, as described above.

With the above configuration, this embodiment can have effects comparable to those of Embodiment 1. In this embodiment, the end portions of the signal electrodes 4 drawn outside the pixel regions P can be electrically insulated by the sealing film (insulating member) 20. Therefore, even if the conductive liquid 16 leaks out of the pixel region P, the display failure can be minimized. Similarly to Embodiment 1, as shown in FIG. 7A, even when the conductive liquid 16x leaks out to the signal driver 7 side, the display element 10 of this embodiment can limit the display failure to a point defect alone, and thus can minimize the display failure.

### [Modified example of Embodiment 2]

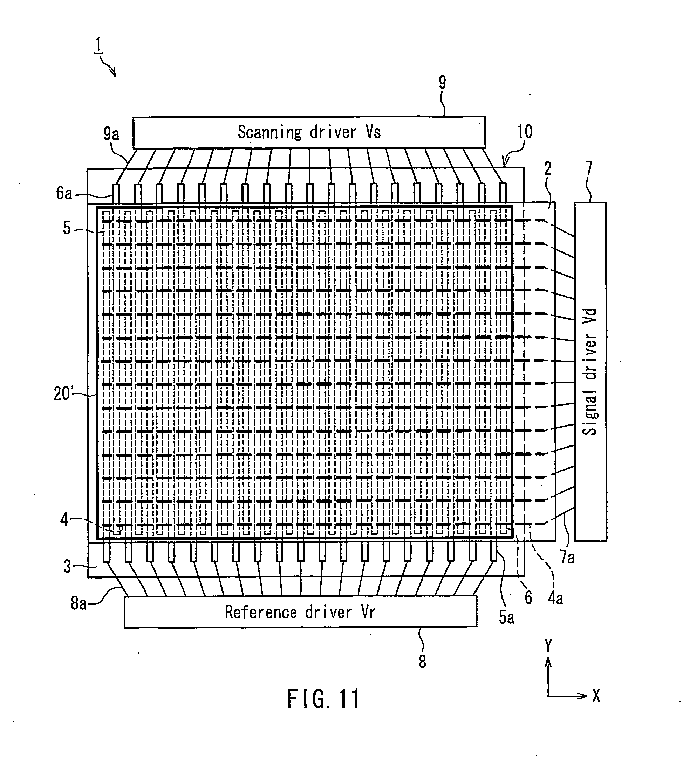

FIG. 11 is a plan view for explaining an image display apparatus of a modified example of Embodiment 2 of the present invention. In FIG. 11, this embodiment mainly differs from Embodiment 2 in that a sealing member that is provided along the entire periphery of the upper substrate and the lower substrate to seal the gap between them is used. The same components as those of Embodiment 2 are denoted by the same reference numerals, and the explanation will not be repeated.

As shown in FIG. 11, in the display element 10 of this embodiment, the end portions of the signal electrodes 4 are drawn from the inside of the pixel regions P to the signal driver 7 side and electrically insulated by a sealing member 20'. The sealing member 20' is inherently formed in the display element 10, and provided along the entire periphery of the upper substrate 2 and the lower substrate 3 to seal the gap between them.

With the above configuration, this embodiment can have effects comparable to those of Embodiment 1. In this embodiment, the sealing member 20' for sealing the gap between the upper substrate (first substrate) 2 and the lower substrate (second substrate) 3 also serves as a sealing film (insulating member) that electrically insulates the end portions of the signal electrodes 4 drawn outside the pixel regions P. Therefore, the display element 10 having a simple structure can be easily achieved. Moreover, this embodiment can save the space for the insulating member, and thus can easily make the display element 10 compact.

### [Embodiment 3]

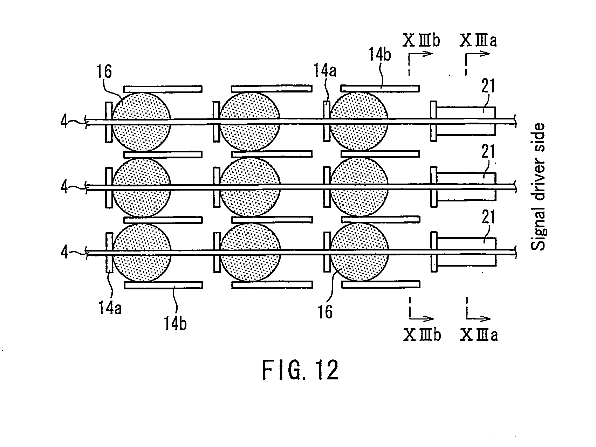

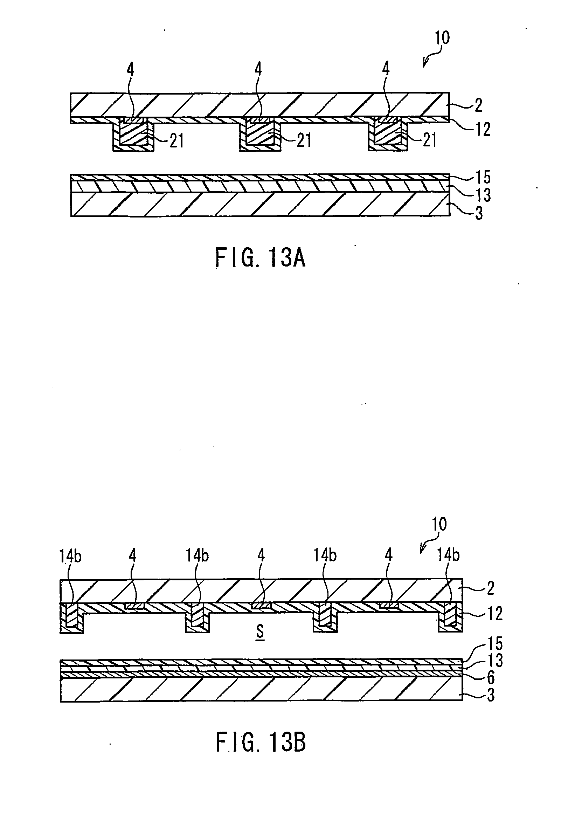

FIG. 12 is a plan view showing the main configuration of a display element of Embodiment 3 of the present invention. FIGS. 13A and 13B are cross-sectional views taken along the line XIIIa-XIIIa and the line XIIIb-XIIIb in FIG. 12, respectively. In FIGS. 12, 13A, and 13B, this embodiment mainly differs from Embodiment 1 in that extended portions of the ribs that are extended in the arrangement direction of the signal electrodes are used instead of the insulating film. The same components as those of Embodiment 1 are denoted by the same reference numerals, and the explanation will not be repeated.

As shown in FIGS. 12,13A, and 13B, in the display element 10 of this embodiment, unlike Embodiment 1, the ribs 14a, 14b are formed on the upper substrate 2. Moreover, as shown in FIGS. 12 and 13A, the end portions of the signal electrodes 4 are drawn from the inside of the pixel regions P to the signal driver 7 side and covered with extended portions (insulating members) 21 of the ribs 14 that are formed on the surface of the upper substrate 2. In other words, the end portions of the signal electrodes 4 drawn outside the pixel regions P are electrically insulated by the upper substrate 2 and the extended portions 21. In a plurality of pixel regions P provided on the signal driver 7 side (i.e., the rightmost pixel regions P in FIG. 1), the extended portions 21 are integrally formed with the ribs 14a on the signal driver 7 side and extended in the arrangement direction of the signal electrodes 4. Moreover, the extended portions 21 are located inside a sealing member (not shown) for sealing the gap between the upper substrate 2 and the lower substrate 3 so that the extended portions 21 and the sealing member are close to each other.

As shown in FIG. 13B, in each of the pixel regions P, the signal electrode 4 is not covered with the extended portion 21, and directly comes into contact with the conductive liquid 16 via the hydrophobic film 12, as described above.

With the above configuration, this embodiment can have effects comparable to those of Embodiment 1. In this embodiment, the end portions of the signal electrodes 4 drawn outside the pixel regions P can be electrically insulated by the extended portions (insulating member) 21 of the ribs 14. Therefore, even if the conductive liquid 16 leaks out of the pixel region P, the display failure can be minimized. Similarly to Embodiment 1, as shown in FIG. 7A, even when the conductive liquid 16x leaks out to the signal driver 7 side, the display element 10 of this embodiment can limit the display failure to a point defect alone, and thus can minimize the display failure.

### [Embodiment 4]

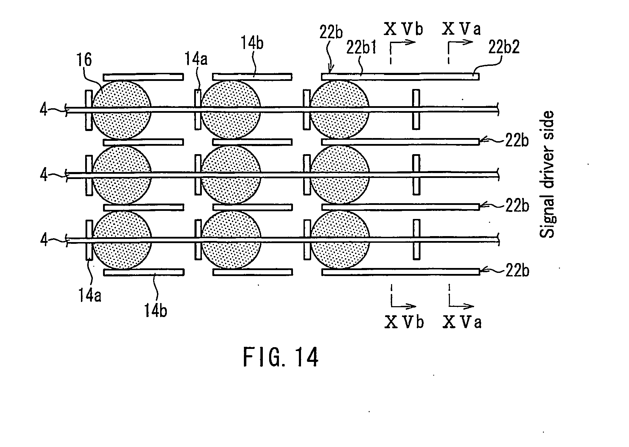

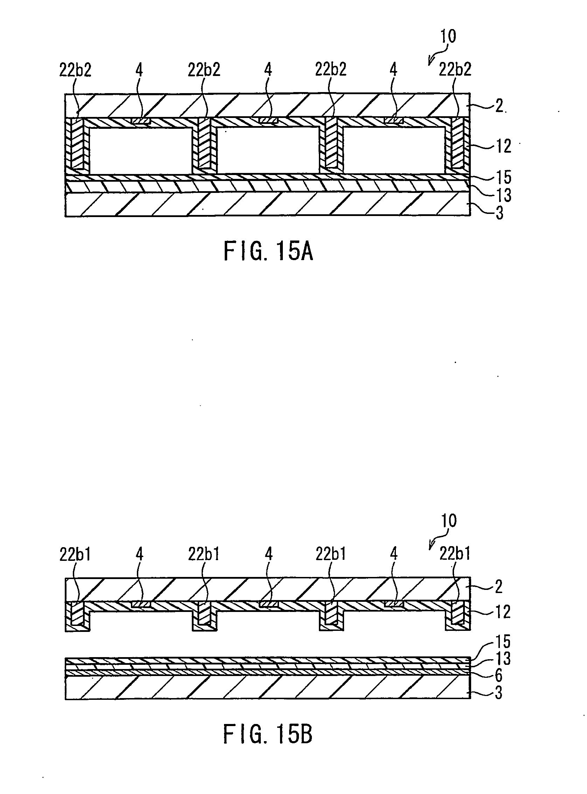

FIG. 14 is a plan view showing the main configuration of a display element of Embodiment 4 of the present invention. FIGS. 15A and 15B are cross-sectional views taken along the line XVa-XVa and the line XVb-XVb in FIG. 14, respectively. In FIGS. 14,15A, and 15B, this embodiment mainly differs from Embodiment 3 in that, instead of the extended portions (insulating members) of the ribs, the ribs are elongated along the arrangement direction of the signal electrodes so that the elongated portions sandwich each of the end portions of the signal electrodes drawn outside the pixel regions. The same components as those of Embodiment 1 are denoted by the same reference numerals, and the explanation will not be repeated.

As shown in FIG. 14, in the display element 10 of this embodiment, in a plurality of pixel regions P provided on the signal driver 7 side (i.e., the rightmost pixel regions P in FIG. 1), the ribs 22b arranged parallel to the signal electrodes 4 are elongated from the inside of the pixel regions P to the signal driver 7 side. Specifically, each of the ribs 22b is formed of a partition 22b1 and an elongated portion 22b2. The partition 22b1 is located inside the pixel region P and used to partition the pixel region P. The elongated portion 22b2 is located outside the pixel region P and elongated along the arrangement direction of the signal electrodes. Moreover, as shown in FIG. 14, the elongated portions 22b2 of two adjacent ribs 22b are provided to sandwich the end portion of the signal electrode 4 drawn outside the pixel region P.

As shown in FIG. 15A, the length of the elongated portions 22b2 protruding from the upper substrate 2 is determined so that the elongated portions 22b2 substantially come into close contact with the lower substrate 3. Therefore, even if the conductive liquid 16 leaks out from the pixel region P to a space between two adjacent elongated portions 22b2, this configuration can completely prevent the conductive liquid 16 from passing between the elongated portion 22b2 and the lower substrate 3 and flowing into a space (i.e., a space under one of two adjacent signal electrodes 4) adjacent to the above space (i.e., the space under the other of the two adjacent signal electrodes 4).

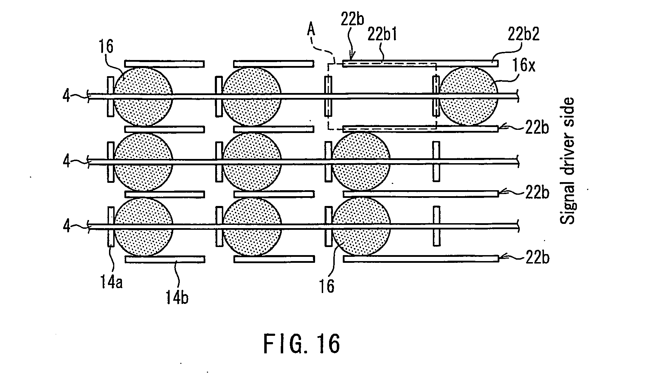

Specifically, in the product of this embodiment, even if the conductive liquid 16 leaks out of the pixel region P, e.g., due to an unusual shock or vibration applied to the display element 10, the product can prevent a plurality of signal electrodes from being short-circuited by the leakage of the conductive liquid 16. As shown in FIG. 16, when a conductive liquid 16x leaks out from the upper right pixel region P to the signal driver 7 side, this conductive liquid 16x is prevented by the elongated portion 22b2 from flowing into a lower place in FIG. 16. Accordingly, it is possible to prevent a short circuit in the two adjacent signal electrodes 4 caused by the conductive liquid 16x. Consequently, in the display element 10 of this embodiment, a display failure is to occur only in the upper right pixel region P from which the conductive liquid 16x has leaked out, as indicated by a dotted line A in FIG. 16. Therefore, even when the conductive liquid 16x leaks out to the signal driver 7 side, the display element 10 of this embodiment can limit the display failure to a point defect alone, and thus can minimize the display failure.

As shown in FIG. 15B, in each of the pixel regions P, the signal electrode 4 is not covered with the insulating film 19, and directly comes into contact with the conductive liquid 16 via the hydrophobic film 12, as described above. Moreover, similarly to the above embodiment, the length of the partitions 22b1 protruding from the upper substrate 2 is determined so as to prevent the flow of the conductive liquid 16 between the adjacent pixels.

In the above configuration, the ribs 22b of the display element 10 of this embodiment have the elongated portions 22b2 that are elongated along the arrangement direction of the signal electrodes 4 so as to sandwich each of the end portions of the signal electrodes 4 drawn outside the pixel regions P. Therefore, even if the conductive liquid 16 leaks out of the pixel region P, e.g., when an unusual shock or vibration is applied to the display element 10, the display element 10 can prevent a plurality of signal electrodes 4 from being short-circuited by the leakage of the conductive liquid 16, and thus can prevent the occurrence of a linear display failure. Consequently, in this embodiment, unlike the conventional example, even if the conductive liquid 16 leaks out of the pixel region P, the display element 10 can minimize the display failure.

It should be noted that the above embodiments are all illustrative and not restrictive. The technological scope of the present invention is defined by the appended claims, and all changes that come within the range of equivalency of the claims are intended to be embraced therein.

For example, in the above description, the present invention is applied to an image display apparatus including a display portion that can display color images. However, the present invention is not limited thereto, as long as it is applied to an electric apparatus with a display portion that displays the information including characters and images. For example, the present invention is suitable for various electric apparatuses with display portions such as a personal digital assistant such as an electronic organizer, a display apparatus for a personal computer or television, and an electronic paper.

In the above description, the electrowetting-type display element is used, in which the conductive liquid is moved in accordance with the application of an electric field to the conductive liquid. However, the display element of the present invention is not limited thereto, as long as it is an electric-field-induced display element that can change the display color on the display surface by moving the conductive liquid in the display space with the use of an external electric field. For example, the present invention can be applied to other types of electric-field-induced display elements such as an electroosmotic type, an electrophoretic type, and a dielectrophoretic type.

As described in each of the above embodiments, the electrowetting-type display element is preferred because the conductive liquid can be moved at a high speed and a low drive voltage. Moreover, since three different electrodes are used to move the conductive liquid slidably, the electrowetting-type display element can achieve both a high switching speed of the display color on the display surface and electric power saving more easily than the display element in which the shape of the conductive liquid is changed. In the electrowetting-type display element, the display color is changed with the movement of the conductive liquid. Therefore, unlike a liquid crystal display apparatus or the like, there is no viewing angle dependence. Moreover, since a switching device does not need to be provided for each pixel, a high-performance matrix-driven display element having a simple structure can be achieved at a low cost. Further, the electrowetting-type display element does not use a birefringent material such as a liquid crystal layer. Therefore, it is possible to easily provide a high brightness display element with excellent utilization efficiency of light from the backlight or ambient light used for information display.

The above description refers to the transmission type display element including a backlight. However, the present invention is not limited thereto, and may be applied to a reflection type display element including a light reflection portion such as a diffuse reflection plate, a semi-transmission type display element including the light reflection portion along with a backlight, or the like.

In the above description, the signal electrodes are provided on the upper substrate (first substrate) and the reference electrodes and the scanning electrodes are provided on the lower substrate (second substrate). However, the present invention is not limited thereto, and may have a configuration in which the signal electrodes are placed in the display space so as to come into contact with the conductive liquid, and the reference electrodes and the scanning electrodes are provided on one of the first substrate and the second substrate so as to be electrically insulated from the conductive liquid and each other. Specifically, e.g., the signal electrodes may be provided on the second substrate or on the ribs, and the reference electrodes and the scanning electrodes may be provided on the first substrate.

In the above description, the reference electrodes and the scanning electrodes are located on the effective display region side and the non-effective display region side, respectively. However, the present invention is not limited thereto, and the reference electrodes and the scanning electrodes may be located on the non-effective display region side and the effective display region side, respectively.

In the above description, the reference electrodes and the scanning electrodes are provided on the surface of the lower substrate (second substrate) that faces the display surface side. However, the present invention is not limited thereto, and can use the reference electrodes and the scanning electrodes that are buried in the second substrate made of an insulating material. In this case, the second substrate also can serve as a dielectric layer, which can eliminate the formation of the dielectric layer. Moreover, the signal electrodes may be directly provided on the first and second substrates serving as dielectric layers, and thus may be placed in the display space.

In the above description, the reference electrodes and the scanning electrodes are made of transparent electrode materials. However, the present invention is not limited thereto, as long as either one of the reference electrodes and the scanning electrodes, which are arranged to face the effective display regions of the pixels, are made of the transparent electrode materials. The other electrodes that do not face the effective display regions can be made of opaque electrode materials such as aluminum, silver, chromium, and other metals.

In the above description, the reference electrodes and the scanning electrodes are in the form of stripes. However, the shapes of the reference electrodes and the scanning electrodes of the present invention are not limited thereto. For example, the reflection type display element may use linear or mesh electrodes that are not likely to cause a light loss, since the utilization efficiency of light used for information display is lower in the reflection type display element than in the transmission type display element.

In the above description, the signal electrodes are linear wiring. However, the signal electrodes of the present invention are not limited thereto, and can be wiring with other shapes such as mesh wiring.

As described in each of the above embodiments, it is preferable that the shape of the signal electrodes is determined using the transmittance of the reference electrodes and the scanning electrodes that are transparent electrodes. This is because even if the signal electrodes are made of an opaque material, shadows of the signal electrodes can be prevented from appearing on the display surface, and thus a decrease in display quality can be suppressed. The use of the linear wiring is more preferred because the decrease in display quality can be reliably suppressed.

In the above description, the conductive liquid is a potassium chloride aqueous solution, and the signal electrodes include at least one of gold, silver, copper, platinum, and palladium. However, the present invention is not limited thereto, as long as a material that is electrochemically inert to the conductive liquid is used for the signal electrodes that are placed in the display space and come into contact with the conductive liquid. Specifically, the conductive liquid can be, e.g., a material including an electrolyte such as a zinc chloride, potassium hydroxide, sodium hydroxide, alkali metal hydroxide, zinc oxide, sodium chloride, lithium salt, phosphoric acid, alkali metal carbonate, or ceramics with oxygen ion conductivity. The solvent can be, e.g., an organic solvent such as alcohol, acetone, formamide, or ethylene glycol other than water. The conductive liquid of the present invention also can be an ionic liquid (room temperature molten salt) including pyridine-, alicyclic amine-, or aliphatic amine-based cations and fluorine anions such as fluoride ions or triflate.

As described in each of the above embodiments, the aqueous solution in which a predetermined electrolyte is dissolved is preferred for the conductive liquid because the display element can have excellent handling properties and also be easily produced.

The signal electrodes of the present invention may be in the passive state including an electrode body composed of a conductive metal such as aluminum, nickel, iron, cobalt, chromium, titanium, tantalum, niobium, or an alloy thereof and an oxide film disposed to cover the surface of the electrode body.

As described in each of the above embodiments, the signal electrodes including at least one of gold, silver, copper, platinum, and palladium are preferred because these metals have a low ionization tendency and make it possible not only to simplify the signal electrodes, but also to reliably prevent an electrochemical reaction between the signal electrodes and the conductive liquid. Thus, the display element can easily prevent a reduction in the reliability and have a long life. Moreover, with the use of the metals having a low ionization tendency, the interfacial tension at the interface between the signal electrodes and the conductive liquid can be relatively small. Therefore, when the conductive liquid is not moved, it can be easily held in a stable state at the fixed position.

In the above description, the nonpolar oil is used. However, the present invention is not limited thereto, as long as an insulating fluid that is not mixed with the conductive liquid is used. For example, air may be used instead of the oil. Moreover, silicone oil or an aliphatic hydrocarbon also can be used as the oil.

As described in each of the above embodiments, the nonpolar oil that is not compatible with the conductive liquid is preferred because the droplets of the conductive liquid move more easily in the nonpolar oil compared to the use of air and the conductive liquid. Consequently, the conductive liquid can be moved at a high speed, and the display color can be switched at a high speed.

In the above description, the black colored conductive liquid and the color filter layer are used to form the pixels of R, G, and B colors on the display surface side. However, the present invention is not limited thereto, as long as a plurality of pixel regions are provided in accordance with a plurality of colors that enable full-color display to be shown on the display surface. Specifically, the conductive liquids with different colors such as RGB, CMY composed of cyan (C), magenta (M), and yellow (Y), or RGBYC also can be used.

In the above description, the color filter layer is formed on the surface of the upper substrate (first substrate) that faces the non-display surface side. However, the present invention is not limited thereto, and the color filter layer may be formed on the surface of the first substrate that faces the display surface side or on the lower substrate (second substrate). Thus, the color filter layer is preferred compared to the use of the conductive liquids with different colors because the display element can be easily produced. Moreover, the color filter layer is also preferred because the effective display region and the non-effective display region can be properly and reliably defined with respect to the display space by the color filter (aperture) and the black matrix (light-shielding layer) included in the color filter layer, respectively.

In the above description, the insulating member or the elongated portions of the ribs are provided only on the signal driver (signal voltage application portion) side. However, the present invention is not limited thereto, and the insulating member or the elongated portions of the ribs may be provided on the opposite side to the signal voltage application portion, and electrically insulate the end portions of the signal electrodes on the opposite side.

In the above description, the signal voltage application portion is provided at one end of the signal electrodes. However, the present invention is not limited thereto, and the signal application voltage portion may be provided at both ends of the signal electrodes. In such a case, the insulating member or the elongated portions of the ribs also may be provided at both ends of the signal electrodes.

In Embodiments 1, 2, and 3, the end portions of the signal electrodes drawn outside the pixel regions are electrically insulated by the upper substrate (first substrate) and the insulating film (insulating member), the upper substrate and the sealing film (insulating member), and the upper substrate and the extended portions (insulating members) of the ribs, respectively. However, the present invention is not limited thereto, and the end portions of the signal electrodes may be electrically insulated only by the insulating film, the sealing film, or the extended portions of the ribs.

The ribs are formed on the lower substrate (second substrate) in Embodiments 1 and 2, and on the upper substrate (first substrate) in Embodiments 3 and 4. However, the ribs of the present invention may be formed on at least one of the first substrate and the second substrate.

In addition to the above description, Embodiments 1 to 4 may be appropriately combined.

### Industrial Applicability

The present invention is useful for a display element that can minimize a display failure even if the conductive liquid leaks out of the pixel region, and an electric apparatus using the display element.

### Description of Reference Numerals

- 1: Image display apparatus (electric apparatus)
- 2: Upper substrate (first substrate)
- 3: Lower substrate (second substrate)
- 4: Signal electrode
- 5: Reference electrode
- 6: Scanning electrode
- 7: Signal driver (signal voltage application portion)
- 8: Reference driver (reference voltage application portion)
- 9: Scanning driver (scanning voltage application portion)
- 10: Display element
- 11: Color filter layer
- 11r, 11g, 11b: Color filter (aperture)
- 11s: Black matrix (light-shielding layer)
- 12: Hydrophobic film
- 13: Dielectric layer
- 14, 14a, 14b, 22b: Rib (partition)
- 22b2: Elongated portion
- 16: Conductive liquid
- 17: Oil (insulating fluid)
- 19: Insulating film (insulating member)
- 20, 20': Sealing film (insulating member)
- 21: Extended portion (of rib) (insulating member)
- S: Display space
- P: Pixel region
- P1: Effective display region
- P2: Non-effective display region

## Claims

1. A display element that comprises a first substrate provided on a display surface side, a second substrate provided on a non-display surface side of the first substrate so that a predetermined display space is formed between the first substrate and the second substrate, an effective display region and a non-effective display region that are defined with respect to the display space, and a conductive liquid sealed in the display space so as to be moved toward the effective display region or the non-effective display region, and that is capable of changing a display color on the display surface side by moving the conductive liquid,
wherein the display element comprises:
a plurality of signal electrodes that are placed in the display space so as to come into contact with the conductive liquid, and are also provided along a predetermined arrangement direction;
a plurality of reference electrodes that are provided on one of the first substrate and the second substrate so as to be electrically insulated from the conductive liquid and to be located on one of the effective display region side and the non-effective display region side, and are also arranged so as to intersect with the plurality of the signal electrodes;
a plurality of scanning electrodes that are provided on one of the first substrate and the second substrate so as to be electrically insulated from the conductive liquid and the plurality of the reference electrodes and to be located on the other of the effective display region side and the non-effective display region side, and are also arranged so as to intersect with the plurality of the signals electrodes,
a plurality of pixel regions that are located at each of the intersections of the plurality of the signal electrodes and the plurality of the scanning electrodes; and
ribs that are provided on at least one of the first substrate and the second substrate so as to partition an inside of the display space in accordance with each of the plurality of the pixel regions, and
wherein an insulating member is provided to electrically insulate end portions of the plurality of the signal electrodes drawn outside the plurality of the pixel regions.

2. The display element according to claim 1, wherein the insulating member includes an insulating film that covers the end portions of the plurality of the signal electrodes.

3. The display element according to claim 1, wherein the insulating member includes extended portions of the ribs that are extended in the arrangement direction of the plurality of the signal electrodes so as to cover the end portions of the plurality of the signal electrodes.

4. The display element according to any one of claims 1 to 3, wherein a hydrophobic film is formed on a surface of the insulating member.

5. The display element according to claim 1, wherein the insulating member includes a sealing film that is interposed between the first substrate and the second substrate.

6. The display element according to claim 5, wherein the sealing film is provided along an entire periphery of the first substrate and the second substrate, and seals a gap between the first substrate and the second substrate.

7. A display element that comprises a first substrate provided on a display surface side, a second substrate provided on a non-display surface side of the first substrate so that a predetermined display space is formed between the first substrate and the second substrate, an effective display region and a non-effective display region that are defined with respect to the display space, and a conductive liquid sealed in the display space so as to be moved toward the effective display region or the non-effective display region, and that is capable of changing a display color on the display surface side by moving the conductive liquid,
wherein the display element comprises:
a plurality of signal electrodes that are placed in the display space so as to come into contact with the conductive liquid, and are also provided along a predetermined arrangement direction;
a plurality of reference electrodes that are provided on one of the first substrate and the second substrate so as to be electrically insulated from the conductive liquid and to be located on one of the effective display region side and the non-effective display region side, and are also arranged so as to intersect with the plurality of the signal electrodes;
a plurality of scanning electrodes that are provided on one of the first substrate and the second substrate so as to be electrically insulated from the conductive liquid and the plurality of the reference electrodes and to be located on the other of the effective display region side and the non-effective display region side, and are also arranged so as to intersect with the plurality of the signals electrodes,
a plurality of pixel regions that are located at each of the intersections of the plurality of the signal electrodes and the plurality of the scanning electrodes; and
ribs that are provided on at least one of the first substrate and the second substrate so as to partition an inside of the display space in accordance with each of the plurality of the pixel regions, and
wherein the ribs have elongated portions that are elongated along the arrangement direction of the plurality of the signal electrodes so as to sandwich each of end portions of the plurality of the signal electrodes drawn outside the plurality of the pixel regions.

8. The display element according to any one of claims 1 to 7, wherein the plurality of the signal electrodes are provided along a predetermined arrangement direction, and
the plurality of the reference electrodes and the plurality of the scanning electrodes are alternately arranged so as to intersect with the plurality of the signal electrodes, and
wherein the display element comprises:
a signal voltage application portion that is connected to the plurality of the signal electrodes and applies a signal voltage in a predetermined voltage range to each of the signal electrodes in accordance with information to be displayed on the display surface side;
a reference voltage application portion that is connected to the plurality of the reference electrodes and applies one of a selected voltage and a non-selected voltage to each of the reference electrodes, the selected voltage allowing the conductive liquid to move in the display space in accordance with the signal voltage and the non-selected voltage inhibiting a movement of the conductive liquid in the display space; and
a scanning voltage application portion that is connected to the plurality of the scanning electrodes and applies one of a selected voltage and a non-selected voltage to each of the scanning electrodes, the selected voltage allowing the conductive liquid to move in the display space in accordance with the signal voltage and the non-selected voltage inhibiting a movement of the conductive liquid in the display space.

9. The display element according to any one of claims 1 to 8, wherein the plurality of the pixel regions are provided in accordance with a plurality of colors that enable full-color display to be shown on the display surface side.

10. The display element according to any one of claims 1 to 9, wherein an insulating fluid that is not mixed with the conductive liquid is movably sealed in the display space.

11. The display element according to any one of claims 1 to 10, wherein a dielectric layer is formed on the surfaces of the plurality of the reference electrodes and the plurality of the scanning electrodes.

12. The display element according to any one of claims 1 to 11, wherein the non-effective display region is defined by a light-shielding layer that is provided on one of the first substrate and the second substrate, and
the effective display region is defined by an aperture formed in the light-shielding layer.

13. An electric apparatus comprising a display portion that displays information including characters and images,
wherein the display portion comprises the display element according to any one of claims 1 to 12.
